# FASCICULE DE BREVET EUROPEEN

(11) **EP 3 639 227 B1**
(45) Date de publication et mention de la délivrance du brevet: **06.11.2024**
(21) Numéro de dépôt: 18731413.3
(22) Date de dépôt: 12.06.2018
(51) Int. Cl.: G07F 7/08, G06Q 20/32, G06K 19/06

(54) **PROCÉDÉ DE TRANSMISSION DE DONNÉES VERS UNE TÊTE DE LECTURE MAGNÉTIQUE, PROCÉDÉ DE TRAITEMENT DES DONNÉES REÇUES, TERMINAL DE PAIEMENT ET PROGRAMME CORRESPONDANTS**
VERFAHREN ZUR DATENÜBERTRAGUNG AUF EINEN MAGNETLESENKOPF, AUFGEHOBENE DATENVERARBEITUNGSVERFAHREN, ZAHLUNGSANSCHLUSS UND PROGRAMM DAVON
METHOD OF TRANSMITTING DATA TO A MAGNETIC READING HEAD, RECEIVED DATA PROCESSING METHOD, PAYMENT TERMINAL AND PROGRAM THEREOF

(30) Priorité: 13.06.2017 FR 1755309
(43) Date de publication de la demande: 22.04.2020
(73) Titulaire: Banks and Acquirers International Holding, 75015 Paris (FR)
(72) Inventeur: QUENTIN, Pierre, 95880 Enghien Les Bains (FR)
(74) Mandataire: LLR
(86) Numéro de dépôt international: PCT/EP2018/065551
(87) Numéro de publication internationale: WO 2018/229075

(56) Documents cités:
- WO-A1-2010/022129
- WO-A1-2016/110591
- US-A1- 2006 022 033
- US-A1- 2012 074 232
- US-A1- 2013 320 080
- US-A1- 2016 162 883
- US-B1- 9 224 141

## Description

### 1. Domaine de l'invention

La présente invention se rapporte au domaine des opérations de paiement. Elle a plus particulièrement pour objet une méthode permettant de transmettre des données secondaires vers une tête de lecture magnétique d'un terminal de paiement, en complément de données principales relatives à un moyen de paiement. L'invention concerne également un procédé de traitement des données reçues, mis en oeuvre par un terminal de paiement.

### 2. Art Antérieur

La plupart des cartes de paiement comprennent une bande magnétique, généralement située au dos de la carte, qui contient des données relatives à la carte de paiement. De telles cartes de paiement à bande magnétique se rapportent notamment à des cartes de crédit, de débit, des cartes cadeau ou encore à des cartes promotions. Les données relatives à la carte de paiement (par exemple un numéro de compte bancaire, un nom de titulaire, une date d'expiration, etc.) sont inscrites sur la bande magnétique en alternant l'orientation de particules magnétiques intégrées dans la bande. Ces données sont généralement transmises à un terminal de paiement en faisant glisser la carte dans un lecteur de bande magnétique du terminal de paiement. Un tel lecteur comprend notamment au moins une tête de lecture magnétique et un circuit de décodage associé. Lorsque la carte est glissée dans le lecteur de bande magnétique, la bande magnétique de la carte se déplace devant la tête de lecture. Cette bande magnétique mobile, qui contient des domaines magnétiques de polarité alternée, génère alors un champ magnétique dans l'ouverture de détection étroite de la tête de lecture. La tête de lecture convertit ce champ magnétique en un signal électrique équivalent. Le circuit de décodage amplifie et numérise ce signal électrique, ce qui permet de recréer la même séquence de données que celle inscrite à l'origine sur la bande magnétique. L'encodage de la bande magnétique d'une carte de paiement est décrit dans les normes internationales ISO/IEC 7811 et 7813.

La popularité et les capacités croissantes des téléphones intelligents (également appelés smartphones) ont incité les industriels à proposer des solutions de paiement à l'aide de ces terminaux de communication. Cependant, un des principaux obstacles à l'adoption de ces solutions de paiement a été le manque de canal de transfert de données entre de tels terminaux de communication et les terminaux de paiement déployés sur les points de vente. Par exemple, bien que de nombreux smartphones intègrent aujourd'hui des fonctionnalités de communication en champ proche (NFC, de l'anglais « Near Field Communication ») dans le but notamment d'offrir à l'utilisateur des solutions de paiement sans contact, beaucoup de terminaux de paiement ne sont pas encore compatibles avec une telle technologie de paiement sans contact. L'utilisateur n'a alors pas d'autre choix que de conserver sur lui une carte de paiement traditionnelle en plus de son smartphone, afin d'être assuré de pouvoir réaliser une opération de paiement en toutes circonstances.

Diverses solutions ont été proposées pour contourner ces problèmes d'incompatibilité, avec pour objectif d'assurer une compatibilité maximale avec le parc de terminaux de paiement actuellement déployé dans le monde. Une solution récente consiste à doter un terminal de communication mobile de l'utilisateur (typiquement son smartphone) d'un dispositif d'émission de données qui comprend notamment une bobine apte à générer un champ magnétique similaire à celui généré par la bande magnétique d'une carte de paiement lors de son passage dans le lecteur de bande magnétique d'un terminal de paiement électronique. Un tel dispositif d'émission de données, décrit par exemple dans le document WO 2016/007475, peut notamment se brancher sur la prise audio du smartphone. D'autres solutions reposant sur le même principe général, mais qui ne nécessitent pas de coupler un dispositif supplémentaire au smartphone, ont également été décrites : ces solutions reposent sur l'utilisation d'une bobine déjà présente dans le smartphone (par exemple la bobine utilisée pour la recharge par induction de certains smartphones) pour générer un tel champ magnétique fluctuant. Ainsi, il devient possible d'effectuer une opération de paiement sans contact au moyen d'un smartphone mettant en oeuvre une telle technologie dès lors que le terminal de paiement utilisé pour l'opération de paiement est muni d'un lecteur de carte à bande magnétique (ce qui est le cas d'une très grande majorité de terminaux de paiement électroniques). Il suffit à l'utilisateur d'approcher son smartphone à une distance suffisamment proche du terminal de paiement pour que la tête de lecture capte les fluctuations du champ magnétique émis par le smartphone (ou par le dispositif qui y est connecté). Du point de vue du terminal de paiement, tout se passe alors comme si une carte de paiement à bande magnétique avait été passée dans son lecteur de bande magnétique. Cette technique permet donc de créer un canal de transfert de données sans contact entre un smartphone et un terminal de paiement, pour la transmission de données relatives à une carte de paiement préalablement stockées dans le smartphone, en vue de la réalisation d'une opération de paiement. Cette solution vise donc à simplifier, pour l'utilisateur, la réalisation d'opérations de paiement : ces dernières peuvent en effet être réalisées simplement et rapidement, avec un nombre restreint de manipulations, au moyen d'un terminal de communication en sa possession. Le document WO2016/110591 décrit une technique de transmission de données à partir d'un terminal de communication et à destination d'une tête magnétique de lecture de bande magnétique.

Néanmoins, en pratique, dans un nombre de plus en plus fréquent d'opérations de paiement, l'utilisateur a besoin de fournir des informations complémentaires en plus des informations liées à son moyen de paiement. C'est notamment le cas lorsque l'utilisateur adhère à un programme de fidélité, et qu'il souhaite par exemple bénéficier d'une réduction immédiate sur un achat qu'il est en train d'effectuer, ou encore cumuler des points de fidélité associé à l'opération d'achat pour obtenir ultérieurement un avantage le récompensant de sa fidélité. Dans ce cas, l'utilisateur doit fournir au commerçant des informations complémentaires permettant de l'identifier au sein du programme de fidélité. Ces informations complémentaires - ou données secondaires - sont par exemple fournies sous la forme d'un code à barres destiné à être scanné par le commerçant. Un tel code à barre peut notamment être inscrit sur une carte de fidélité physique (l'utilisateur doit alors sortir cette carte de son portefeuille pour la présenter au commerçant) ou encore être affiché sur l'écran d'un smartphone de l'utilisateur, au moyen d'une application dédiée (l'utilisateur doit alors ouvrir cette application et y sélectionner la carte de fidélité à afficher). Il en résulte que les avantages procurés par la solution de paiement précédemment décrite - permettant d'émuler, au moyen d'un dispositif électronique tel qu'un smartphone, le passage d'une carte de paiement à bande magnétique dans le lecteur d'un terminal de paiement - sont en grande partie annihilés par les manipulations et le temps requis par ailleurs pour la transmission de données secondaires, accessoires au paiement.

Il existe donc un besoin de procédés permettant de transmettre et traiter des données secondaires en marge d'une opération de paiement, et qui ne présentent pas au moins certains des inconvénients exposés précédemment.

### 3. Résumé

La technique proposée ne présente pas ces inconvénients de l'art antérieur. Plus particulièrement, selon un aspect, la technique proposée se rapporte à un procédé de transmission de données défini par la revendication 1.

Ainsi le procédé de transmission proposé permet de mettre à profit l'opération de transmission des données représentatives d'un moyen de paiement (les données normalisées) à un terminal de paiement pour transmettre également des données secondaires destinées par exemple à confirmer, enrichir ou compléter une opération de paiement. De cette manière, la transmission des données relatives au moyen de paiement et la transmission de données secondaires ne sont plus dissociées : ces informations sont transmises par un même canal de communication et d'un seul tenant, via la génération d'un champ magnétique apte à être capté par la tête de lecture magnétique d'un terminal de paiement. Les données secondaires étant par ailleurs transmises entre des émissions successives des données normalisées, elles ne perturbent pas une réception classique de ces données normalisées par le terminal de paiement. La compatibilité de la solution avec tout type de terminaux de paiement, même ceux qui ne permettent pas le traitement des données secondaires, est donc assurée.

Selon un mode de réalisation particulier, lesdites données secondaires comprennent au moins une donnée représentative d'un jeton d'authentification bancaire.

Ainsi les données secondaires offrent la possibilité de valider une opération de paiement, au niveau d'un terminal de paiement, en permettant une vérification de l'authenticité des données normalisées représentatives d'un moyen de paiement.

Selon encore un mode de réalisation particulier, lesdites données secondaires comprennent au moins un identifiant de programme de fidélité.

Ainsi la technique proposée permet de transmettre des données permettant d'établir l'appartenance de l'utilisateur à un programme de fidélité, simultanément aux données représentatives d'un moyen de paiement qui permettent de finaliser une opération de paiement en cours de traitement. La fourniture de ces données secondaires au terminal de paiement permet à ce dernier de les traiter pour compléter avantageusement l'opération de paiement (par exemple en vue d'obtenir une réduction, ou pour créditer des points de fidélité sur un compte fidélité). De cette manière, la fourniture de ces informations au commerçant ne nécessite pas de manipulations supplémentaires et chronophages pour l'utilisateur (par exemple, il n'a pas besoin de rechercher dans son portefeuille une carte de fidélité à présenter au commerçant).

Selon un autre aspect, la technique proposée se rapporte également à un procédé de traitement de données défini par la revendication 4.

Ainsi la présence de données secondaires au sein d'un flux de données reçu par un terminal de paiement peut être détectée, et ces données secondaires peuvent être récupérées en même temps que des données normalisées représentatives d'un moyen de paiement, pour effectuer un traitement en lien avec ou en marge de la réalisation d'une opération de paiement.

De même, il est possible de différencier les traitements à réaliser sur les données secondaires, en fonction du type de données secondaires récupérées au sein du flux de données reçu par le terminal de paiement.

En outre, la détection de balises bien identifiées au sein du flux de données reçu par le terminal de paiement permet de faciliter la récupération des séquences de données normalisées, mais également la récupération des données secondaires comprises entre ces séquences.

La détection d'une suite de caractères particulière après la balise de fin de séquence de données normalisées indique au terminal de paiement que des données secondaires sont présentes dans le flux de données, et que le terminal de paiement peut lire et traiter ces données secondaires. En outre, cet indicateur permet de connaître le type des données secondaires avant même de les avoir reçues, afin de réaliser un traitement ultérieur adapté de ces données secondaires en conséquence.

Selon un mode de réalisation particulier, ladite étape de traitement comprend, lorsque les données secondaires prennent la forme d'au moins un jeton d'authentification :
- une étape de réalisation d'un calcul cryptographique, à partir desdites données normalisées ;
- une étape de comparaison d'un résultat dudit calcul cryptographique avec ledit au moins un jeton d'authentification, délivrant une information d'authenticité desdites données normalisées.

Ainsi le terminal de paiement a la possibilité de mettre en oeuvre un calcul cryptographique dont le résultat est comparé à un jeton d'authentification compris dans les données secondaires reçues, afin de vérifier l'authenticité des données normalisées représentatives d'un moyen de paiement. Le cas échéant, le terminal de paiement peut ainsi bloquer une opération de paiement si le résultat du calcul cryptographique n'est pas cohérent avec le jeton d'authentification (les données de paiement fournies pourraient alors avoir été obtenues de manière frauduleuse).

Selon un autre mode de réalisation particulier, ladite étape de traitement comprend, lorsque les données secondaires prennent la forme d'au moins un identifiant de programme de fidélité, une étape de transmission dudit au moins un identifiant de programme de fidélité à un serveur de gestion de programme de fidélité.

Ainsi le terminal de paiement est à même de gérer simultanément la réalisation d'une opération de paiement (au moyen des données normalisées), et les aspects de fidélisation associés (au moyen des données secondaires, qui permettent par exemple d'identifier l'utilisateur auprès d'un serveur de gestion de programme de fidélité).

Selon un mode de réalisation particulier, ladite étape de comparaison de la suite de caractères avec au moins une donnée de référence comprend la comparaison de cette suite de caractères avec une pluralité de données de référence représentatives de types de données secondaires.

Selon encore un autre mode de réalisation particulier, le procédé de traitement de données comprend en outre :
- une étape d'obtention desdites au moins deux séquences de données normalisées consécutives identifiées ;
- une étape de comparaison desdites au moins deux séquences de données normalisées, délivrant une information de contrôle.

De cette manière, l'information de contrôle permet de vérifier que les données normalisées reçues n'ont pas été altérées durant la transmission durant la transmission des données (il est peu probable que la même erreur de transmission survienne deux fois de suite lors de la transmission d'une séquence de données normalisées).

Selon une implémentation préférée, les différentes étapes des procédés selon la technique proposée sont mises en oeuvre par un ou plusieurs logiciels ou programmes d'ordinateur, comprenant des instructions logicielles destinées à être exécutées par un processeur de données d'un composant relais selon la technique proposée et étant conçu pour commander l'exécution des différentes étapes des procédés.

En conséquence, la technique proposée vise aussi un programme défini par la revendication 11.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou terminal de communication capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme "composant" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le composant concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le composant concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres composants logiciels.

Selon un autre aspect, la technique proposée se rapporte également à un terminal de paiement défini par la revendication 9.

Selon encore un autre aspect, la technique proposée se rapporte à un signal défini par la revendication 10.

Les différents modes de réalisation mentionnés ci-dessus sont utilisés pour la mise en oeuvre de la technique proposée.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1a présente la structure générale d'un flux de données transmis d'un dispositif électronique vers une tête de lecture magnétique d'un terminal de paiement, selon une technique de l'art antérieur ;
- la figure 1b présente la structure générale d'un flux de données transmis d'un dispositif électronique vers une tête de lecture magnétique d'un terminal de paiement, selon le principe général de l'invention ;
- la figure 2 illustre les principales étapes d'un procédé de transmission de données mis en oeuvre dans un dispositif électronique, dans un mode de réalisation particulier de l'invention ;
- la figure 3 illustre les principales étapes d'un procédé de traitement des données reçues par une tête de lecture magnétique d'un terminal de paiement, dans un mode de réalisation particulier de l'invention ;
- la figure 4 décrit une architecture simplifiée d'un dispositif électronique apte à mettre en oeuvre un procédé de transmission de données vers une tête de lecture magnétique, dans un mode de réalisation particulier ;

- - la figure 5 décrit une architecture simplifiée d'un terminal de paiement dans un mode de réalisation particulier.

### 5. Description

### 5.1. Principe général

Le principe général de l'invention consiste à exploiter de manière astucieuse certaines possibilités offertes par la technique précédemment décrite d'émulation, par un dispositif électronique, du champ magnétique généré par une carte à bande magnétique, avec pour objectif de lever certaines contraintes actuelles liées à la réalisation d'opérations de paiement. Plus précisément, il est proposé de profiter de l'opération de transmission des données représentatives d'un moyen de paiement pour transmettre à un terminal de paiement des données secondaires destinées par exemple à confirmer, enrichir ou compléter l'opération de paiement effectuée. Par exemple, avec la technique proposée, lorsqu'un utilisateur effectue une opération de paiement auprès d'une enseigne pour acheter un bien ou un service, des données secondaires relatives à l'adhésion de l'utilisateur à un programme de fidélité de cette enseigne sont transmises au terminal de paiement en même temps que les informations relatives à la carte de paiement de l'utilisateur. En d'autres termes, la transmission de données relatives au moyen de paiement d'une part et la transmission de données secondaires d'autre part ne s'effectuent plus en deux temps, mais d'un seul tenant : le nombre de manipulations requises pour l'utilisateur et pour le commerçant est réduit, et tous deux gagnent du temps. Cet objectif est atteint en insérant les données secondaires au sein du flux de données comprenant les données principales relatives au moyen de paiement, d'une manière particulière qui fait l'objet de la présente technique et qui est détaillée ci-après.

Il convient de rappeler en premier quelques informations utiles à la compréhension de l'invention.

Sur une carte de paiement à bande magnétique classique, les données relatives à la carte de paiement - qui sont donc des données représentatives d'un moyen de paiement - sont inscrites sur la bande magnétique selon un formalisme particulier défini dans le cadre de la norme internationale ISO/IEC 7813. La bande magnétique de la carte de paiement peut notamment comprendre jusqu'à trois pistes (numérotées de 1 à 3), chacune de ces pistes présentant un nombre prédéterminé d'informations relatives à la carte de paiement, les données inscrites sur chaque piste étant structurées de manière précise. On assure ainsi la compatibilité de la carte de paiement avec un nombre important de terminaux de paiement (il suffit qu'un terminal de paiement soit apte à lire une des pistes pour que l'opération de paiement puisse être réalisée). Il n'est pas utile, dans le cadre de la présente invention, de détailler plus en avant le formalisme particulier propre à chaque piste. Néanmoins, il convient de noter que toutes les pistes partagent une même structure générale, à savoir :
- une balise de début (également appelée « start sentinel » en anglais);
- des données, appelées principales dans le cadre de la présente invention, qui comprennent des données relatives à la carte de paiement (numéro de compte également appelé « Primary Account Number » ou PAN en anglais, date d'expiration, etc.) ;
- une balise de fin (également appelée « end sentinel » en anglais) ;
- un caractère de contrôle de parité longitudinale (également appelé caractère LCR, de l'anglais « Longitudinal Redundancy Check »).

L'ensemble de ces données forme donc des données normalisées, en ce sens qu'elles répondent au formalisme décrit dans la norme ISO/IEC 7813. Les données principales sont situées entre la balise de début et la balise de fin, et le caractère de contrôle de parité longitudinale est situé immédiatement après la balise de fin. Les balises de début et de fin sont des caractères bien déterminés permettant de délimiter les données relatives à la carte de paiement et donc de faciliter leur récupération au niveau du terminal de paiement. Ces balises de début et de fin sont différentes, ce qui présente l'avantage de permettre au terminal de paiement de déterminer dans quel sens a été passée une carte de paiement à bande magnétique dans son lecteur (et, le cas échéant, d'inverser l'ordre des données reçues, s'il s'avère que la balise de fin est détectée avant la balise de début). Le caractère de contrôle de parité longitudinale est le résultat d'un calcul effectué à partir des données précédentes, notamment des données principales. Ce caractère est utilisé afin de détecter les éventuelles erreurs de transmission qui pourraient survenir lors de la lecture des données de la bande magnétique de la carte par la tête de lecture magnétique du terminal de paiement. Lorsqu'un terminal de paiement reçoit des données il est supposé calculer par lui-même un caractère de contrôle de parité longitudinale relatif aux données reçues, et comparer ce caractère calculé au caractère de contrôle de parité longitudinale reçu en provenance de la carte à bande magnétique. Lorsqu'une différence est détectée, les données ont probablement été altérées durant la transmission.

Lors de l'utilisation d'une carte bancaire à bande magnétique pour effectuer une opération de paiement, la carte est physiquement glissée, sur toute sa longueur, dans une fente d'un lecteur de carte à bande magnétique, de manière à ce que la bande magnétique soit intégralement lue par au moins une tête de lecture magnétique avec laquelle elle se retrouve en vis-à-vis lors du mouvement de la carte dans la fente. La fente fait donc office de guide, et un seul passage de la carte dans la fente du lecteur est normalement requis pour que les données inscrites sur la bande magnétique soient correctement et intégralement lues, lorsque le mouvement est effectué à une vitesse raisonnable. Dans la technique mise en oeuvre dans le cadre de la présente invention, le passage d'une carte à bande magnétique dans la fente du lecteur du terminal de paiement est remplacé par l'action de positionner un dispositif électronique à proximité d'une telle fente, et donc à proximité d'une tête de lecture apte à capter les fluctuations de champ magnétique générées par le dispositif électronique. La fente ne fait donc plus office de moyen de guidage, et divers paramètres peuvent alors influencer la bonne lecture des données au niveau du terminal de paiement : l'orientation ou la distance du dispositif électronique par rapport au terminal de paiement, ou encore le moment auquel le dispositif électronique est approché du terminal de paiement. Il est donc préférable, au niveau du dispositif électronique, d'émettre de manière cyclique les données normalisées représentatives d'un moyen de paiement, afin de permettre par exemple à l'utilisateur d'ajuster la position du dispositif électronique vis-à-vis du terminal de paiement jusqu'à ce que ces données normalisées soient correctement reçues par le terminal de paiement.

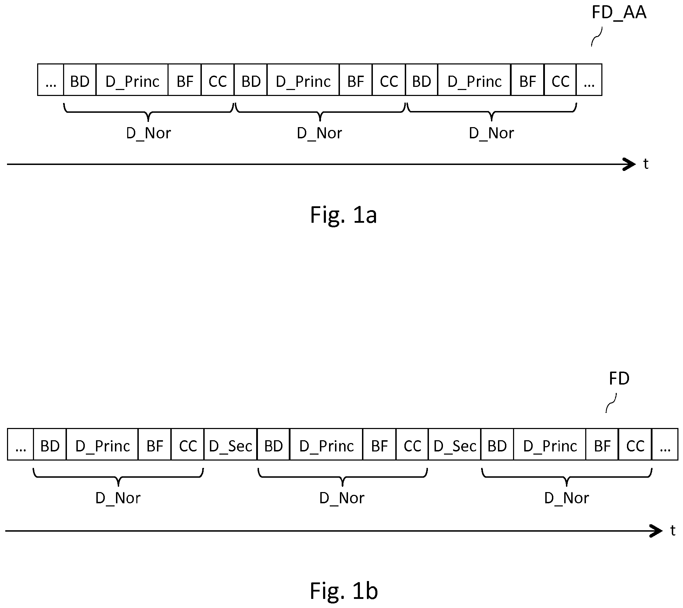

Ceci est notamment illustré en relation avec la **figure 1a****,** qui présente un flux de données FD_AA émis sous la forme de fluctuations d'un champ magnétique par un dispositif électronique, selon le principe d'émulation du champ magnétique créé par une carte à bande magnétique déjà décrit en relation avec l'art antérieur. Le procédé de transmission de données mis en oeuvre au niveau de ce dispositif électronique comprend ainsi une pluralité d'émissions d'une même séquence de données normalisées D_Nor, lesdites données normalisées étant des données représentatives d'un moyen de paiement formatées selon la norme ISO/I EC 7813, comme précédemment décrit. Ces données comprennent donc une balise de début BD, puis des données principales D_Princ, suivies d'une balise de fin BF, et enfin un caractère de contrôle de parité longitudinale CC. Cette émission répétée des données normalisées D_Nor augmente de manière significative les chances que ces données soient correctement reçues par un terminal de paiement auprès duquel le dispositif électronique est approché.

On décrit maintenant, en relation avec la **figure 1b****,** un flux de données FD émis sous la forme de fluctuations d'un champ magnétique par un dispositif électronique, selon le principe général de la présente invention. Ce flux de données FD se distingue du flux de données FD_AA de l'art antérieur en ce sens qu'il comprend la transmission de données secondaires D_Sec, émises entre deux émissions successives de la séquence de données normalisées D_Nor. Le fait que les données transmises ne soient plus les données inscrites sur le support qu'est la bande magnétique d'une carte de paiement, mais des données insérées dans un flux de données construit au niveau d'un dispositif électronique, en fonction des circonstances d'une opération de paiement, permet en effet l'insertion de données secondaires D_Sec au sein d'un tel flux. Ces données secondaires D_Sec sont ainsi transmises en même temps que les données normalisées D_Nor au terminal de paiement. Les données secondaires D_Sec sont cependant astucieusement insérées entre la balise de fin BF d'une séquence de données normalisées courante et la balise de début BD d'une séquence de données normalisées suivante, de sorte que la lecture, par le terminal de paiement, d'une séquence de données normalisées n'est pas perturbée par ces données secondaires D_Sec. Plus particulièrement, selon une caractéristique préférentielle, les données secondaires D_Sec sont insérées après la balise de fin BF d'une séquence de données normalisées courante, juste après un nombre de caractère correspondant à la longueur de la donnée de contrôle de parité longitudinale (généralement un caractère), et elles s'étendent jusqu'à la balise de début BD de la séquence de données normalisées suivante. On assure ainsi une compatibilité de la solution avec les terminaux de paiement existants et déjà déployés, tout en permettant la mise en oeuvre de nouveaux terminaux de paiement pour le traitement de ces données secondaires en plus des données normalisées.

### 5.2. Procédé de transmission de données

Selon un premier aspect, la technique proposée se rapporte donc à un procédé de transmission de données vers une tête de lecture magnétique d'un terminal de paiement. Ce procédé est mis en oeuvre par un dispositif électronique apte à générer un champ magnétique représentatif d'un encodage desdites données. Comme déjà présenté en relation avec l'art antérieur, un tel dispositif électronique peut par exemple être un terminal de communication de type smartphone ou tablette, un dispositif électronique dédié autonome, ou encore un dispositif électronique destiné à être couplé à un terminal de communication (le dispositif électronique peut alors par exemple être intégré à une coque de protection du terminal de communication).

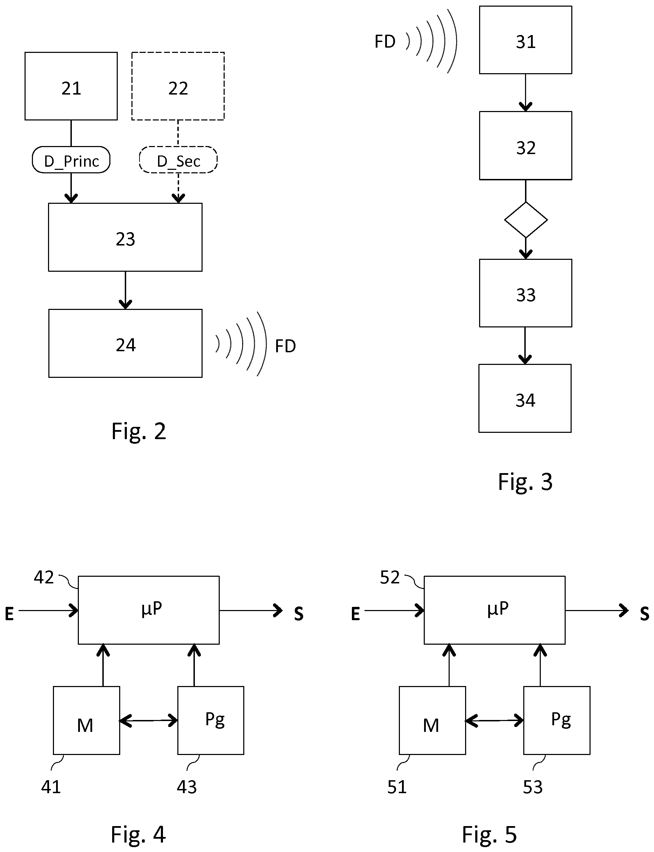

La **figure 2** décrit les principales étapes d'un tel procédé de transmission de données, dans un mode de réalisation particulier. Ce procédé comprend une étape 21 d'obtention de données principales D_Princ, qui sont des données relatives à un moyen de paiement, par exemple un numéro de compte (PAN), un nom de titulaire, et une date d'expiration d'une carte de paiement. Le procédé comprend également une étape 22 d'obtention de données secondaires D_Sec. Dans une étape 23 de construction des données à transmettre, les données principales D_Princ et les données secondaires D_Sec sont organisées et structurées de manière à former le motif de base qui sera répété de manière cycliq ue dans le flux de données FD émis. En particulier, les données principales D_Princ sont formatées conformément à la norme ISO/I EC 7813, délivrant ainsi une séquence de données normalisées D_Nor. Le procédé comprend enfin une étape 24 de transmission d'un flux de données FD, comprenant l'émission répétée du motif de base préalablement construit, sous la forme d'un champ magnétique fluctuant.

Dans un mode de réalisation particulier, les données principales D_Princ et les données secondaires D_Sec sont obtenues au sein d'un élément sécurisé du dispositif électronique. Si le dispositif électronique n'est pas un dispositif autonome, mais un dispositif destiné à être couplé à un terminal de communication, les données sont éventuellement obtenues au sein d'un élément sécurisé du terminal de communication. Ces données ont par exemple été provisionnées au préalable par l'utilisateur au sein d'une application dédiée installée sur le dispositif électronique ou sur le terminal de communication. Une telle application peut notamment être une application de type portefeuille électronique (également appelée « wallet » en anglais), qui permet notamment de stocker des informations associées à plusieurs cartes ainsi que des informations complémentaires. Via cette application, l'utilisateur a la possibilité de choisir les informations de paiement et les données secondaires à utiliser pour une opération de paiement, au cas par cas. Il a aussi la possibilité de configurer des informations de paiement dites « par défaut » et des données secondaires dites « par défaut », qui seront les données utilisées par défaut dans le cadre d'une opération de paiement (à défaut d'un choix particulier autre effectué par l'utilisateur).

Selon différents modes de réalisation du procédé de transmission proposé, les données secondaires D_Sec transmises peuvent comprendre au moins un jeton d'authentification bancaire, et/ou au moins un identifiant de programme de fidélité. Les avantages à transmettre des données secondaires de ce type sont présentés ultérieurement, en relation avec la description de différents modes de réalisation relatifs au procédé de traitement des données mis en oeuvre au niveau du terminal de paiement qui reçoit le flux de données FD.

### 5.3. Procédé de traitement de données

La technique proposée se rapporte également à un procédé de traitement de données reçues par une tête de lecture magnétique d'un terminal de paiement. Ce procédé, mis en oeuvre par le terminal de paiement, est décrit en relation avec la **figure 3****,** dans un mode de réalisation particulier.

Dans une étape d'identification 31, le terminal de paiement identifie au moins deux séquences de données normalisées D_Nor successives au sein d'un flux de données FD reçu au niveau de sa tête de lecture magnétique. Les données normalisées D_Nor sont des données représentatives d'un moyen de paiement, formatées selon la norme ISO/IEC 7813, aussi l'identification de ces données normalisée D_Nor peut se baser sur l'identification de balises de début BD de séquence de données normalisées et de balises de fin BF de séquence de données normalisées.

Le terminal de paiement met ensuite en oeuvre une étape de détermination 32, dans laquelle il détermine si des données particulières, dites données secondaires, sont présentes au sein du flux de données reçu. De telles données secondaires D_Sec sont des données comprises entre deux séquences de données normalisées D_Nor successives parmi les séquences de données normalisées successives préalablement identifiées. Cette étape de détermination 32 d'une présence de données secondaires peut être mise en oeuvre de différentes manières. Dans un mode de réalisation particulier, le terminal de paiement se met à l'écoute de données comprises entre le caractère de contrôle de parité longitudinale - dont la longueur est connue, et dont on sait qu'il se situe immédiatement après la balise de fin BF d'une séquence de données normalisées dans le flux de données reçu, ce qui rend sa détection possible - et la balise de début BD de la séquence de données normalisées suivante au sein du flux. Par exemple, dès que le terminal de paiement détecte qu'il a reçu un caractère de contrôle de parité longitudinale (ce qu'il déduit après détection de la réception d'une balise de fin BF), il stocke dans une mémoire tampon les données reçues qui arrivent au fur et à mesure de la réception du flux FD, jusqu'à ce qu'il détecte la réception d'une balise de début BD de la séquence de données normalisée suivante. Si de telles données existent, alors ce sont des données secondaires D_Sec sur lesquelles le terminal de paiement peut tenter d'effectuer un traitement. Dans un autre mode de réalisation particulier, le caractère situé immédiatement après la balise de fin des données normalisées est astucieusement détourné de sa fonctionnalité première de caractère de contrôle de parité longitudinale, pour servir de marqueur de présence et/ou de type de données secondaires. En effet, contrairement aux données qui sont inscrites sur la bande magnétique d'une carte de paiement, le flux de données est construit et transmis par le dispositif électronique d'émission, et son contenu peut être adapté pour répondre à des circonstances d'opérations de paiement particulières. Dès lors, il est possible de remplacer le caractère de contrôle de parité longitudinale par un caractère spécifique approprié aux besoins d'une opération de paiement en cours, au sein du flux de données transmis. Idéalement, ce caractère spécifique est de même longueur que le caractère de contrôle de parité longitudinale, pour rester conforme au format décrit dans la norme ISO/I EC 7813. Dans ce cas, l'étape de détermination 32 comprend une étape de lecture au sein du flux de données reçu, d'un nombre prédéterminé de caractères situés immédiatement après la balise de fin de séquence de données normalisées dans le flux de données reçu, délivrant une suite de caractères (ce nombre prédéterminé de caractères correspond à la longueur de la donnée de contrôle de parité longitudinale, soit généralement un caractère alphanumérique, soit un octet ou huit bits). Cette suite de caractères est ensuite comparée avec au moins une donnée de référence, pour délivrer un indicateur de référence en cas de comparaison positive.

Cet indicateur de référence peut notamment être un indicateur représentatif d'une présence des données secondaires. Ainsi, la détection d'une suite de caractères particulière après la balise de fin de séquence de données normalisées indique au terminal de paiement que des données secondaires sont présentes dans le flux de données, et que le terminal de paiement peut lire et traiter ces données secondaires.

Selon une caractéristique particulière, la suite de caractères est comparée avec plusieurs données de référence, chaque donnée de référence étant représentative d'un type de données secondaires. Ainsi, le terminal de paiement est à même d'être informé, avant même de les avoir reçues, que les données suivantes du flux sont des données secondaires. Le terminal de paiement connaît également leur type et est donc en mesure d'adapter le traitement de ces données secondaires en conséquence.

Si le terminal de paiement détecte la présence de données secondaires lors de l'étape de détermination 32, il les récupère dans une étape d'obtention 33 (par exemple au sein d'une mémoire tampon), puis il met en oeuvre une étape de traitement 34 de ces données secondaires.

Dans un mode de réalisation particulier, le traitement effectué en étape 34 diffère selon le type des données secondaires obtenues au sein du flux de données reçu par la tête de lecture magnétique. Selon une caractéristique particulière, le type de données secondaires peut être déduit du format des données secondaires. Dans ce cas, il est nécessaire d'avoir déjà récupéré les données secondaires afin de pouvoir identifier leur type. Alternativement, le type des données secondaires peut-être déterminé par le terminal de paiement avant même d'avoir reçu les données secondaires en question, par exemple grâce à l'insertion au sein des données normalisées du flux de données d'un caractère spécifique approprié en lieu et place d'un caractère de contrôle de parité longitudinale, comme décrit précédemment.

Dans un mode de réalisation particulier, le procédé de traitement de données comprend également une étape d'obtention d'au moins deux des séquences de données normalisées consécutives préalablement identifiées, et une étape de comparaison entre-elles de ces séquences de données normalisées, délivrant une information de contrôle. Cette information de contrôle permet notamment de vérifier que les données normalisées reçues n'ont pas été altérées durant la transmission des données entre le dispositif électronique émetteur et le terminal de paiement. En effet, il est peu probable que la même erreur de transmission survienne deux fois de suite lors de la transmission d'une séquence de données normalisées. Ainsi, lorsqu'au moins deux séquences de données normalisées reçues consécutivement sont identiques (au moins en ce qui concerne les données principales comprises entre les balises de début et de fin), on peut considérer que ces données n'ont pas été altérées durant la transmission. Ainsi, le remplacement du caractère de contrôle de parité longitudinale par un caractère spécifique faisant office d'indicateur de la présence et/ou d'un type de données secondaires, tel que proposé dans un mode de réalisation particulier, n'est pas problématique: la solution proposée offre par ailleurs un autre moyen de contrôler que les données reçues au niveau du terminal de paiement sont bien conformes aux données qui ont été transmises par le dispositif électronique. On peut noter que cette même stratégie peut également être appliquée aux données secondaires pour s'assurer qu'elles n'ont pas été altérées lors de leur transmission, dans un autre mode de réalisation particulier.

On présente maintenant brièvement deux exemples de traitements différenciés des données secondaires, en fonction de leur type.

### Exemple 1 : données secondaires de type « jeton d'authentification »

Dans un mode de réalisation particulier, les données secondaires prennent la forme d'un jeton d'authentification de données bancaires. L'étape de traitement 34 comprend alors la réalisation, par le terminal de paiement d'un calcul cryptographique à partir des données normalisées reçues, puis la comparaison du résultat de ce calcul avec ledit au moins un jeton d'authentification reçu sous la forme de données secondaires. Une telle comparaison permet par exemple de s'assurer de l'authenticité des données bancaires transmises, ou encore qu'elles ne sont pas utilisées pour effectuer un paiement à partir d'un dispositif électronique inconnu, ce qui signifie qu'elles pourraient avoir été obtenues de manière frauduleuse. Si la comparaison s'avère négative, c'est à dire que le résultat du calcul cryptographique est différent du jeton d'authentification, les données relatives au moyen de paiement sont rejetées, et l'opération de paiement est annulée.

Selon une caractéristique particulière, le jeton d'authentification est fourni par un élément sécurisé du dispositif électronique d'émission ou d'un terminal de communication auquel il est connecté et/ou par une application tierce sécurisée telle qu'une application bancaire. Dans le mode de réalisation particulier associé à l'exemple qui vient d'être décrit, les données secondaires sont donc utilisées afin de valider ou d'invalider une opération de paiement, ce qui permet d'augmenter la sécurité d'un paiement effectué par ce type de technique et qui n'est pas possible avec les techniques de l'art antérieur.

### Exemple 2 : données secondaires de type « identifiant de programme de fidélité »

Dans un autre mode de réalisation particulier, les données secondaires prennent la forme d'un identifiant de programme de fidélité. L'étape de traitement 34 comprend alors la transmission, par le terminal de paiement, de cet identifiant de programme de fidélité à un serveur de gestion de programme de fidélité. L'utilisateur réalisant l'opération de paiement peut ainsi être identifié (au sein d'une structure de données du serveur de gestion de programme de fidélité par exemple), et bénéficier des avantages que lui procure son adhésion au programme de fidélité (obtention d'une réduction automatiquement appliquée sur le montant à payer, ajout de points de fidélité sur un compte fidélité, etc.). Cette opération est relativement transparente tant pour l'utilisateur que pour le commerçant : l'identifiant de programme de fidélité est transmis au terminal de paiement en même temps que les données relatives au moyen de paiement, l'utilisateur n'a pas eu besoin de présenter une carte de fidélité, et le commerçant n'a donc pas eu non plus à scanner le code à barres associé à une telle carte de fidélité. Il en résulte une économie de temps pour toutes les parties, et donc une augmentation du nombre de traitements de paiement pouvant être réalisés par un opérateur (caissier par exemple). Selon une caractéristique particulière, l'identifiant de programme de fidélité transmis en tant que données secondaires est un identifiant unique de programme de fidélité, sur la base duquel un serveur intermédiaire est à même de retrouver un identifiant de programme de fidélité spécifique de l'utilisateur à utiliser dans le cadre d'une opération de paiement donnée. Dans le mode de réalisation particulier associé à l'exemple qui vient d'être décrit, les données secondaires sont donc utilisées afin de compléter ou enrichir une opération de paiement.

### 5.4. Autres caractéristiques et avantages

On décrit, en relation avec la figure 4, un dispositif électronique comprenant des moyens permettant l'exécution du procédé de transmission de données décrit préalablement, dans un mode de réalisation particulier. Un tel dispositif électronique comprend :
- des moyens d'obtention de données principales D_Princ, relatives à un moyen de paiement, telle qu'un numéro de compte (PAN), un nom de titulaire, et/ou une date d'expiration d'une carte de paiement ;
- des moyens d'obtention de données secondaires D_Sec ;
- des moyens de construction de données à transmettre à partir des données principales D_Princ et des données secondaires D_Sec, lesdits moyens de construction étant notamment aptes à formater les données principales D_Princ conformément à la norme ISO/IEC 7813 pour délivrer des données normalisées D_Nor, et à organiser et structurer les données normalisées D_Nor et les données secondaires D_Sec de manière à former un motif de base d'un flux de données à émettre ;
- des moyens de transmissions desdites données à transmettre, sous la forme d'un flux de données comprenant une pluralité d'alternances d'une même séquence de données normalisées et de données secondaires, par modulation d'un champ magnétique.

Par exemple, le dispositif électronique de transmission comprend une mémoire 41 constituée d'une mémoire tampon, une unité de traitement 42, équipée par exemple d'un microprocesseur, et pilotée par le programme d'ordinateur 43, mettant en oeuvre un notamment un procédé de transmission de données par modulation d'un champ magnétique. À l'initialisation, les instructions de code du programme d'ordinateur 43 sont par exemple chargées dans une mémoire avant d'être exécutées par le processeur de l'unité de traitement 42. L'unité de traitement 42 reçoit par exemple en entrée E au moins une requête pour la transmission de données nécessaires à la réalisation d'une opération de paiement. Le microprocesseur de l'unité de traitement 42 met alors en oeuvre les étapes du procédé de transmission, selon les instructions du programme d'ordinateur 43 de manière à récupérer des données principales relatives à une carte de paiement et des données secondaires destinées à confirmer, enrichir ou compléter l'opération de paiement, et à structurer ces données pour générer en sortie S une modulation d'un champ magnétique émis par une bobine du dispositif électronique. La modulation du champ magnétique est éventuellement précédée d'un encodage des données à transmettre.

Pour cela, le dispositif électronique comprend, outre la mémoire tampon 31, des moyens de communications, tels que des composants de communication réseau, un composant de transmission de données et éventuellement un processeur de chiffrement dédié.

L'ensemble de ces moyens peut se présenter sous la forme d'un processeur particulier implémenté au sein du dispositif, ledit processeur étant un processeur sécurisé, apte à traiter des données de nature confidentielle, comme des données de moyen de paiement ou des jetons d'authentification bancaire. Selon un mode de réalisation particulier, ce dispositif électronique met en oeuvre une application particulière qui est en charge de la réalisation du chiffrement et de la transmission de données, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

La technique proposée se rapporte également à un terminal de paiement intégrant une tête de lecture magnétique et comprenant des moyens permettant l'exécution du procédé de traitement de données décrit précédemment. Un tel terminal de paiement est notamment décrit en relation avec la **figure 5** dans un mode de réalisation particulier, et il comprend :
- des moyens d'identification, au sein d'un flux de données reçu au niveau de la tête de lecture, d'au moins deux séquences de données normalisées successives, lesdites données normalisées étant des données représentatives d'un moyen de paiement, formatées selon la norme ISO/IEC 7813 ;
- des moyens de détermination d'une présence, au sein du flux de données reçu, de données dite secondaires comprises entre deux séquences de données normalisées successives parmi lesdites au moins deux séquences de données normalisées successives préalablement identifiées ;
- des moyens d'obtention desdites données secondaires ;
- des moyens de traitement desdites données secondaires obtenues.

Par exemple, le terminal de paiement comprend une mémoire 51 constituée d'une mémoire tampon, une unité de traitement 52, équipée par exemple d'un microprocesseur, et pilotée par le programme d'ordinateur 53, mettant en oeuvre un notamment un procédé de traitement des données reçues au niveau de la tête de lecture magnétique du terminal de paiement. À l'initialisation, les instructions de code du programme d'ordinateur 53 sont par exemple chargées dans une mémoire avant d'être exécutées par le processeur de l'unité de traitement 52. L'unité de traitement 52 reçoit par exemple en entrée E au moins une instruction d'une initialisation d'une opération de paiement. Le microprocesseur de l'unité de traitement 52 met alors en oeuvre les étapes du procédé de traitement, selon les instructions du programme d'ordinateur 53. Il se met à l'écoute des données reçues au niveau de la tête de lecture magnétique du terminal de paiement, de manière à identifier, au sein du flux reçu, des séquences de données normalisées représentatives d'un moyen de paiement, et à déterminer la présence éventuelle de données secondaires entre deux séquences de données normalisées. En cas de détermination positive, les données secondaires sont obtenues et traitées, et le résultat de ce traitement est notifié en sortie S.

Pour cela, le terminal de paiement comprend, outre la mémoire tampon 41, des moyens de transmission/réception de données qui peuvent se matérialiser sous la forme d'une interface de connexion à un ou plusieurs réseaux de communication, ces moyens permettant éventuellement d'établir une liaison avec des serveurs partenaires pour la gestion de programmes de fidélité. Le terminal de paiement comprend également éventuellement des moyens de calculs cryptographiques, lui permettant de vérifier l'authenticité de données représentatives d'un moyen de paiement reçue sur la base d'une comparaison du résultat d'un calcul cryptographique avec un jeton d'authentification.

Selon un autre aspect, la technique proposée se rapporte également à un signal émis sous la forme d'un champ magnétique par un dispositif électronique. Le signal en question comprend une pluralité d'alternances d'une même séquence de données normalisées et de mêmes données secondaires, les données normalisées étant des données représentatives d'un moyen de paiement, formatées selon la norme ISO/I EC 7813. Aussi, la séquence de données normalisées comprend une balise de début BD de séquence de données normalisées suivie de données principales D_Pr et terminée par une balise de fin BF de séquence de données normalisées. Selon une caractéristique particulière, la séquence de données normalisées comprend en outre, immédiatement après la balise de fin BF de séquence de données normalisées, une donnée de présence représentative de la présence de données secondaires au sein dudit signal. Cette donnée de présence est par exemple codée sur un caractère. De cette manière, on transmet une donnée complémentaire tout en respectant le formalisme édicté par la norme ISO/IEC 7813.

Les modes de réalisation précédemment décrits dans le cadre de la présente invention sont donnés à titre d'exemples illustratifs et non limitatifs, afin d'illustrer au mieux le principe général de l'invention qui est définie dans les revendications. Avec la possibilité déjà décrite de pouvoir transmettre un type de données secondaires, il est notamment possible d'envisager un mode de réalisation particulier dans lequel plusieurs données secondaires distinctes sont transmises au sein d'un même flux de données, chacune de ces données secondaires étant intercalée entre deux séquences identiques de données normalisées. A partir de la réception d'un unique flux de données, et sur la base des types de données secondaires identifiées au sein de ce flux, le terminal de paiement est alors à même d'initier de multiples traitements en complément d'une opération principale de paiement, chacun de ces traitements étant adapté aux données secondaires traitées.

## Revendications

1. Procédé de transmission de données vers une tête de lecture magnétique d'un terminal de paiement, ledit procédé étant mis en oeuvre par un dispositif électronique apte à générer un champ magnétique représentatif d'un encodage desdites données, ladite transmission de données comprenant une pluralité d'émissions d'une même séquence de données normalisées (D_Nor), lesdites données normalisées étant des données représentatives d'un moyen de paiement formatées selon la norme ISO/I EC 7813, , ladite séquence de données normalisées comprenant une balise de début de séquence de données normalisées et une balise de fin de séquence de données normalisées, ledit procédé étant **caractérisé en ce qu'**il comprend en outre la transmission de données secondaires (D_Sec), lesdites données secondaires (D_Sec) étant émises entre deux émissions successives de ladite séquence de données normalisées (D_Nor), ladite séquence de données normalisées comprenant en outre un nombre prédéterminé de caractères situés immédiatement après la balise de fin de ladite séquence de données normalisées, ledit nombre prédéterminé de caractères correspondant à une suite de caractères représentative d'une présence et d'un type desdites données secondaires, lesdites données secondaires étant à traiter par le terminal de paiement en fonction dudit type.

2. Procédé de transmission de données selon la revendication 1 **caractérisé en ce que** lesdites données secondaires comprennent au moins une donnée représentative d'un jeton d'authentification bancaire.

3. Procédé de transmission de données selon la revendication 1 **caractérisé en ce que** lesdites données secondaires comprennent au moins un identifiant de programme de fidélité.

4. Procédé de traitement de données reçues par une tête de lecture magnétique d'un terminal de paiement, ledit procédé étant mise en oeuvre au sein dudit terminal de paiement et **caractérisé en ce qu'**il comprend :
- une étape d'identification, au sein d'un flux de données reçu au niveau de ladite tête de lecture, d'au moins deux séquences de données normalisées successives, lesdites données normalisées étant des données représentatives d'un moyen de paiement formatées selon la norme ISO/IEC 7813, ladite étape d'identification comprenant au moins une identification d'une balise de début de séquence de données normalisées et d'une balise de fin de séquence de données normalisées ;
- une étape de détermination d'une présence, au sein dudit flux de données reçu, de données dite secondaires comprises entre deux séquences de données normalisées successives parmi lesdites au moins deux séquences de données normalisées successives préalablement identifiées, ladite étape de détermination comprenant :
- une étape de lecture au sein du flux de données reçu, d'un nombre prédéterminé de caractères, situés immédiatement après ladite balise de fin de séquence de données normalisées dans ledit flux de données reçu, délivrant une suite de caractères ;
- une étape de comparaison de ladite suite de caractères avec au moins une donnée de référence, délivrant un indicateur de référence desdites données secondaires en cas de comparaison positive.
et lorsque l'étape de détermination d'une présence délivre un résultat positif :
- une étape d'obtention desdites données secondaires ;
- une étape de traitement desdites données secondaires obtenues en fonction dudit type de données secondaires.

5. Procédé de traitement de données selon la revendication 4, **caractérisé en ce que** ladite étape de traitement comprend, lorsque lesdites données secondaires prennent la forme d'au moins un jeton d'authentification :
- une étape de réalisation d'un calcul cryptographique, à partir desdites données normalisées ;
- une étape de comparaison d'un résultat dudit calcul cryptographique avec ledit au moins un jeton d'authentification, délivrant une information d'authenticité desdites données normalisées.

6. Procédé de traitement de données selon la revendication 4, **caractérisé en ce que** ladite étape de traitement comprend, lorsque lesdites données secondaires prennent la forme d'au moins un identifiant de programme de fidélité, une étape de transmission dudit au moins un identifiant de programme de fidélité à un serveur de gestion de programme de fidélité.

7. Procédé de traitement de données selon la revendication 4, **caractérisé en ce que** ladite étape de comparaison de la suite de caractères avec au moins une donnée de référence comprend la comparaison de la suite de caractères avec une pluralité de données de référence représentatives de types de données secondaires.

8. Procédé de traitement de données selon la revendication 4, **caractérisé en ce qu'**il comprend en outre :
- une étape d'obtention desdites au moins deux séquences de données normalisées consécutives identifiées ;
- une étape de comparaison desdites au moins deux séquences de données normalisées, délivrant une information de contrôle.

9. Terminal de paiement comprenant une tête de lecture magnétique, ledit terminal étant **caractérisé en ce qu'**il comprend :
- des moyens d'identification, au sein d'un flux de données reçu au niveau de ladite tête de lecture, d'au moins deux séquences de données normalisées successives, lesdites données normalisées étant des données représentatives d'un moyen de paiement, formatées selon la norme ISO/IEC 7813 lesdits moyens d'identification étant adaptés à identifier au moins une balise de début de séquence de données normalisées et une balise de fin de séquence de données normalisées ;
- des moyens de détermination d'une présence, au sein dudit flux de données reçu, de données dite secondaires comprises entre deux séquences de données normalisées successives parmi lesdites au moins deux séquences de données normalisées successives préalablement identifiées, lesdits moyens de détermination comprenant :
- des moyens de lecture au sein d'un flux de données reçu, d'un nombre prédéterminé de caractères, situés immédiatement après ladite balise de fin de séquence de données normalisés dans ledit flux de données reçu, délivrant une suite de caractères ;
- des moyens de comparaison de ladite suite de caractères avec au moins une donnée de référence, délivrant un indicateur de référence représentatif d'une présence et d'un type desdites données secondaires en cas de comparaison positive ;
- des moyens d'obtention desdites données secondaires ;
- des moyens de traitement desdites données secondaires obtenues, en fonction dudit type de données secondaires.

10. Signal émis sous la forme d'un champ magnétique par un dispositif électronique vers une tête de lecture magnétique d'un terminal de paiement, ledit signal étant **caractérisé en ce qu'**il comprend une pluralité d'alternances d'une même séquence de données normalisées et de mêmes données secondaires, lesdites données normalisées étant des données représentatives d'un moyen de paiement, formatées selon la norme ISO/IEC 7813, ladite séquence de données normalisées comprenant une balise de début (BD) de séquence de données normalisées suivie de données principales (D_Pr) et terminée par une balise de fin (BF) de séquence de données normalisées, ladite séquence de données normalisées comprend en outre, immédiatement après ladite balise de fin (BF) de séquence de données normalisées, un nombre prédéterminé de caractères correspondant à une suite de caractères représentative de la présence et d'un type desdites données secondaires au sein dudit signal, le traitement desdites données secondaires par le terminal de paiement étant mis en oeuvre en fonction dudit type.

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon l'une quelconque des revendications 1 à 3 et/ou des revendications 4 à 8, lorsqu'il est exécuté sur un ordinateur.

## Patentansprüche

1. Verfahren zur Übertragung von Daten zu einem magnetischen Lesekopf eines Zahlungsterminals, wobei das Verfahren von einer elektronischen Vorrichtung durchgeführt wird, die eingerichtet ist, ein magnetisches Feld zu erzeugen, das für eine Codierung der Daten repräsentativ ist, wobei die Übertragung von Daten eine Vielzahl von Übertragungen einer gleichen Sequenz von standardisierten Daten (D_Nor) umfasst, wobei die standardisierten Daten repräsentative Daten eines Zahlungsmittels sind, die gemäß der Norm ISO/I EC 7813 formatiert sind, wobei die Sequenz der standardisierten Daten eine Markierung für den Beginn der Sequenz der standardisierten Daten und eine Markierung für das Ende der Sequenz der standardisierten Daten aufweist, wobei das Verfahren **dadurch gekennzeichnet ist, dass** es außerdem die Übertragung von Sekundärdaten (D_Sec) umfasst, wobei die Sekundärdaten (D_Sec) zwischen zwei aufeinanderfolgenden Übertragungen der Sequenz der standardisierten Daten (D_Nor) gesendet werden, wobei die Sequenz der standardisierten Daten außerdem eine vorbestimmte Anzahl von Zeichen aufweist, die sich unmittelbar nach der Markierung für das Ende der Sequenz der standardisierten Daten befinden, wobei die vorbestimmte Anzahl von Zeichen einer Zeichenfolge entspricht, die für ein Vorhandensein und einen Typ der Sekundärdaten repräsentativ ist, wobei die Sekundärdaten von dem Zahlungsterminal in Abhängigkeit von dem Typ zu verarbeiten sind.

2. Verfahren zur Datenübertragung nach Anspruch 1, **dadurch gekennzeichnet, dass** die Sekundärdaten mindestens ein Datenelement aufweisen, das ein Token zur Bankauthentifizierung darstellt.

3. Verfahren zur Datenübertragung nach Anspruch 1, **dadurch gekennzeichnet, dass** die Sekundärdaten mindestens eine Treueprogramm-ID aufweisen.

4. Verfahren zur Verarbeitung von Daten, die von einem magnetischen Lesekopf eines Zahlungsterminals empfangen werden, wobei das Verfahren innerhalb des Zahlungsterminals durchgeführt wird und **dadurch gekennzeichnet ist, dass** es Folgendes umfasst:
- einen Schritt des Identifizierens von mindestens zwei aufeinanderfolgenden Sequenzen standardisierter Daten innerhalb eines am Lesekopf empfangenen Datenstroms, wobei die standardisierten Daten repräsentative Daten eines Zahlungsmittels sind, die gemäß der Norm ISO/IEC 7813 formatiert sind, wobei der Identifizierungsschritt mindestens eine Identifizierung einer Markierung für den Beginn einer Sequenz der standardisierten Daten und einer Markierung für das Ende der Sequenz der standardisierten Daten aufweist;
- einen Schritt des Bestimmens eines Vorhandenseins von sogenannten sekundären Daten innerhalb des empfangenen Datenstroms, die zwischen zwei aufeinanderfolgenden Sequenzen der standardisierten Daten unter den mindestens zwei zuvor identifizierten aufeinanderfolgenden Sequenzen standardisierter Daten enthalten sind, wobei der Schritt des Bestimmens Folgendes umfasst:
- einen Schritt des Lesens einer vorbestimmten Anzahl von Zeichen innerhalb des empfangenen Datenstroms, die sich unmittelbar nach der Markierung für das Ende der Sequenz der standardisierten Daten in dem empfangenen Datenstrom befinden und eine Zeichenfolge liefern;
- einen Schritt des Vergleichens der Zeichenfolge mit mindestens einem Referenzdatum, wobei im Falle eines positiven Vergleichs ein Referenzindikator der Sekundärdaten ausgegeben wird.
und wenn der Schritt des Bestimmens eines Vorhandenseins ein positives Ergebnis liefert:
- einen Schritt des Erhaltens der genannten Sekundärdaten;
- einen Schritt des Verarbeitens der erhaltenen Sekundärdaten in Abhängigkeit von dem Typ der Sekundärdaten.

5. Verfahren zur Verarbeitung von Daten nach Anspruch 4, **dadurch gekennzeichnet, dass** der Schritt des Verarbeitens, wenn die sekundären Daten die Form von mindestens einem Authentifizierungs-Token annehmen, umfasst:
- einen Schritt des Durchführens einer kryptografischen Berechnung anhand der genannten standardisierten Daten;
- einen Schritt des Vergleichens eines Ergebnisses der kryptografischen Berechnung mit dem mindestens einen Authentifizierungstoken, das eine Authentizitätsinformation der standardisierten Daten liefert.

6. Verfahren zur Verarbeitung von Daten nach Anspruch 4, **dadurch gekennzeichnet, dass** der Schritt des Verarbeitens, wenn die sekundären Daten die Form von mindestens einer Treueprogramm-Kennung annehmen, einen Schritt des Übertragens der mindestens einen Treueprogramm-Kennung an einen Treueprogramm-Verwaltungsserver umfasst.

7. Verfahren zur Verarbeitung von Daten nach Anspruch 4, **dadurch gekennzeichnet, dass** der Schritt des Vergleichens der Zeichenfolge mit mindestens einem Referenzdatum das Vergleichen der Zeichenfolge mit einer Vielzahl von Referenzdaten umfasst, die für sekundäre Datentypen repräsentativ sind.

8. Verfahren zur Verarbeitung von Daten nach Anspruch 4, **dadurch gekennzeichnet, dass** es ferner umfasst:
- einen Schritt des Erhaltens der mindestens zwei identifizierten, aufeinanderfolgenden Sequenzen der standardisierten Daten;
- einen Schritt des Vergleichens der mindestens zwei Sequenzen der standardisierten Daten, der eine Kontrollinformation liefert.

9. Zahlungsterminal mit einem magnetischen Lesekopf, wobei das Terminal **dadurch gekennzeichnet ist, dass** es Folgendes umfasst:
- Mittel zur Identifizierung von mindestens zwei aufeinanderfolgenden Sequenzen von standardisierten Daten innerhalb eines am Lesekopf empfangenen Datenstroms, wobei die standardisierten Daten für ein Zahlungsmittel repräsentative Daten sind, die gemäß der Norm ISO/IEC 7813 formatiert sind, wobei die Identifizierungsmittel geeignet sind, mindestens eine Markierung für den Beginn der standardisierten Datensequenz und eine Markierung für das Ende der Sequenz der standardisierten Daten zu identifizieren;
- Mittel zur Bestimmung des Vorhandenseins von sogenannten sekundären Daten innerhalb des empfangenen Datenstroms, die zwischen zwei aufeinanderfolgenden Sequenzen der standardisierten Daten unter den mindestens zwei zuvor identifizierten aufeinanderfolgenden Sequenzen der standardisierten Daten enthalten sind, wobei die Mittel zur Bestimmung umfassen:
- Mittel zum Lesen einer vorbestimmten Anzahl von Zeichen innerhalb eines empfangenen Datenstroms, die sich unmittelbar nach der Markierung des Endes der Sequenz der standardisierten Daten in dem empfangenen Datenstrom befinden und eine Zeichenfolge liefern;
- Mittel zum Vergleichen der Zeichenfolge mit mindestens einem Referenzdatum, die im Falle eines positiven Vergleichs einen Referenzindikator liefern, der für das Vorhandensein und den Typ der Sekundärdaten repräsentativ ist;
- Mittel zum Erhalten der Sekundärdaten;
- Mittel zur Verarbeitung der erhaltenen sekundären Daten in Abhängigkeit vom Typ der sekundären Daten.

10. Signal, das in Form eines Magnetfeldes von einer elektronischen Vorrichtung an einen magnetischen Lesekopf eines Zahlungsterminals gesendet wird, wobei das Signal **dadurch gekennzeichnet ist, dass** es mehrere Wechsel einer gleichen Sequenz von standardisierten Daten und gleicher Sekundärdaten aufweist, wobei die standardisierten Daten repräsentative Daten eines Zahlungsmittels sind, die gemäß der Norm ISO/I EC 7813 formatiert sind, wobei die Sequenz standardisierter Daten eine Markierung für den Beginn (BD) der Sequenz der standardisierten Daten, gefolgt von Hauptdaten (D_Pr), aufweist und durch eine Markierung für das Ende (BF) der Sequenz der standardisierten Daten abgeschlossen wird, wobei die Sequenz der standardisierten Daten außerdem unmittelbar nach der Markierung für das Ende (BF) der Sequenz der standardisierten Daten eine vorbestimmte Anzahl von Zeichen aufweist, die einer Zeichenfolge entsprechen, die für das Vorhandensein und einen Typ der Sekundärdaten innerhalb des Signals repräsentativ ist, wobei die Verarbeitung der Sekundärdaten durch das Zahlungsterminal in Abhängigkeit von dem Typ implementiert wird.

11. Computerprogrammprodukt, das von einem Kommunikationsnetz heruntergeladen und/oder auf einem computerlesbaren Medium gespeichert und/oder von einem Mikroprozessor ausgeführt werden kann, **dadurch gekennzeichnet, dass** es Programmcodeanweisungen zur Ausführung eines Verfahrens nach einem der Ansprüche 1 bis 3 und/oder der Ansprüche 4 bis 8 aufweist, wenn es auf einem Computer ausgeführt wird.

## Claims

1. A method of transmitting data to a magnetic read head of a payment terminal, said method being implemented by an electronic device suitable for generating a magnetic field representative of an encoding of said data, said data transmission comprising a plurality of transmissions of a same standardised data sequence (D_Nor), said standardised data being data representative of a means of payment formatted in accordance with the ISO/I EC 7813 standard, said standardised data sequence comprising a start tag for the standardised data sequence and an end tag for the standardised data sequence, said method being **characterised in that** it further comprises the transmission of secondary data (D_Sec), said secondary data (D_Sec) being transmitted between two successive transmissions of said standardised data sequence (D_Nor), said standardised data sequence further comprising a predetermined number of characters located immediately after the end tag of said standardised data sequence, said predetermined number of characters corresponding to a sequence of characters representative of a presence and a type of said secondary data, said secondary data being to be processed by the payment terminal as a function of said type.

2. A method of transmitting data as claimed in claim 1, **characterised in that** said secondary data comprises at least one data item representative of a bank authentication token.

3. A method of transmitting data as claimed in claim 1, **characterised in that** said secondary data comprise at least one loyalty programme identifier.

4. A method of processing data received by a magnetic read head of a payment terminal, said method being implemented within said payment terminal and **characterised in that** it comprises:
- a step of identifying, within a data stream received at said read head, at least two successive standardised data sequences, said standardised data being data representative of a means of payment formatted in accordance with the ISO/IEC 7813 standard, said identification step comprising at least one identification of a standardised data sequence start tag and a standardised data sequence end tag ;
- a step of determining the presence, within said received data stream, of so-called secondary data comprised between two successive standardised data sequences from among said at least two previously identified successive standardised data sequences, said determination step comprising :
- a step of reading, within the received data stream, a predetermined number of characters located immediately after said standardised data sequence end tag in said received data stream, delivering a sequence of characters ;
- a step of comparing said sequence of characters with at least one reference data item, delivering a reference indicator of said secondary data in the event of a positive comparison.
and when the step of determining a presence delivers a positive result:
- a step for obtaining said secondary data ;
- a step of processing said secondary data obtained as a function of said type of secondary data.

5. Method of processing data according to claim 4, **characterised in that** said processing step comprises, when said secondary data takes the form of at least one authentication token:
- a step of performing a cryptographic calculation, on the basis of said normalised data ;
- a step of comparing a result of said cryptographic calculation with said at least one authentication token, delivering information about the authenticity of said standardised data.

6. Method of processing data according to claim 4, **characterised in that** said processing step comprises, when said secondary data take the form of at least one loyalty program identifier, a step of transmitting said at least one loyalty program identifier to a loyalty program management server.

7. A method of processing data as claimed in claim 4, **characterised in that** said step of comparing the character string with at least one reference data item comprises comparing the character string with a plurality of reference data items representative of secondary data types.

8. A method of processing data according to claim 4, **characterised in that** it further comprises:
- a step of obtaining said at least two consecutive standardised data sequences identified ;
- a step of comparing said at least two standardised data sequences, delivering control information.

9. Payment terminal comprising a magnetic reading head, said terminal being **characterised in that** it comprises :
- means for identifying, within a data stream received at said read head, at least two successive standardised data sequences, said standardised data being data representative of a means of payment, formatted in accordance with the ISO/IEC 7813 standard, said identification means being adapted to identify at least one standardised data sequence start tag and a standardised data sequence end tag;
- means for determining the presence, within said received data stream, of so-called secondary data comprised between two successive standardised data sequences from among said at least two previously identified successive standardised data sequences, said determination means comprising :
- means for reading, within a received data stream, a predetermined number of characters located immediately after said standardised data sequence end tag in said received data stream, delivering a sequence of characters ;
- means for comparing said sequence of characters with at least one reference data item, delivering a reference indicator representative of a presence and a type of said secondary data in the event of a positive comparison;
- means for obtaining said secondary data; and
- means for processing said secondary data obtained, as a function of said type of secondary data.

10. Signal emitted in the form of a magnetic field by an electronic device to a magnetic read head of a payment terminal, said signal being **characterised in that** it comprises a plurality of alternations of the same standardised data sequence and the same secondary data, said standardised data being data representative of a means of payment, formatted in accordance with the ISO/IEC 7813 standard, said standardised data sequence comprising a start tag (BD) for a standardised data sequence followed by main data (D_Pr) and terminated by an end tag (BF) for a standardised data sequence, said standardised data sequence further comprising, immediately after said end tag (BF) for standardised data sequence, a predetermined number of characters corresponding to a sequence of characters representative of the presence and a type of said secondary data within said signal, the processing of said secondary data by the payment terminal being implemented as a function of said type.

11. A computer program product downloadable from a communications network and/or stored on a computer-readable medium and/or executable by a microprocessor, **characterised in that** it comprises program code instructions for executing a method according to any one of claims 1 to 3 and/or claims 4 to 8, when executed on a computer.
